# EUROPÄISCHE PATENTANMELDUNG

(11) **EP 1 378 979 A1**
(43) Veröffentlichungstag der Anmeldung: **07.01.2004**
(21) Anmeldenummer: 02015019.9
(22) Anmeldetag: 05.07.2002
(51) Int. Cl.: H02G 3/30

(54) **Kabelkanalsystem**

(71) Anmelder: Kirsch, Norbert, 94265 Patersdorf (DE)
(72) Erfinder: Kirsch, Norbert, 94265 Patersdorf (DE)
(74) Vertreter: Lorenz, Werner, Dr.-Ing.

(57) **Zusammenfassung**

Ein Kabelkanalsystem für technische Möbel, Schränke und Gestelle, welche zur Aufnahme elektrischer und elektronischer Geräte und Bauteile vorgesehen sind, weist Kabelführungsbügel zum Führen und Halten von Kabelsträngen auf. Für die Kabelstränge sind Abdeckungen vorgesehen, die an den Kabelführungsbügeln fixierbar sind.

## Beschreibung

Die Erfindung betrifft ein Kabelkanalsystem gemäß dem Oberbegriff von Anspruch 1.

Das Kabelkanalsystem ist insbesondere für technische Möbel, z.B. Konsolen, Arbeitsplätze und Systemmöbel für Betriebs- und Leitzentralen, Call Center und Computer-Leitstände sowie Montage-Arbeitsplätze geeignet, in denen eine Vielzahl von Kabeln bzw. Kabelsträngen für elektrische und elektronische Geräte in einer möglichst geordneten und übersichtlichen Weise geführt und gehalten werden. Neben Kabelsträngen können auch Schläuche mit Hilfe des Kabelkanalsystems geordnet, sicher geführt und gehalten werden.

Es ist bekannt, zur Halterung und Führung von Kabeln und Schläuchen an technischen Möbeln und in Elektronikschränken, Gestellen und dergleichen Kabelführungsbügel zu verwenden. Die Kabelführungsbügel weisen einen Innenbereich zur Aufnahme der Kabel auf, wobei der Innenbereich von Schenkeln gebildet wird, welche an einem Kabeleinführungsbereich zusammengeführt sind. Ringförmige Kabelführungsbügel weisen einen Kabeleinführungsbereich mit sich übergreifenden Schenkeln auf. In der Regel sind die Kabelführungsbügel etwa rechteckig ausgebildet. Der Kabeleinführungsbereich kann nahe einem Befestigungsbereich, welcher zur Befestigung der Kabelführungsbügel am Geräteschrank oder am Gestell dient, oder auch gegenüberliegend ausgebildet sein.

Aus der DE 44 13 124 C2 ist ein Kabelführungsbügel bekannt, welcher mit Hilfe einer Befestigungsschraube und einem Haltestück, welches am Befestigungsbereich anliegt, an einem Träger, einer Platte oder einer Schiene eines Schaltschrankes befestigt wird. Der Kabeleinführungsbereich ist von einem nach innen abgebogenen Endabschnitt eines Schenkels gebildet.

Aus der DE 195 11 464 A1 ist es bekannt, einen Kabelführungsbügel mit Hilfe eines einrastenden Halteelementes im Schaltschrank, beispielsweise an einem Profilträger, einer Platte oder einer Schiene, zu befestigen.

Aus der DE 38 13 002 C2 ist ein C-förmiger Kabelführungsbügel mit einer Durchbrechung und unterschiedlichen Schenkellängen am Kabeleinführungsbereich bekannt, welcher mit Hilfe einer Befestigungsplatte und einer Befestigungsschraube in entsprechenden Bohrungen eines Vertikalprofils befestigt werden kann.

In der DE 90 17 290 U1 ist ein Kabelführungsbügel beschrieben, welcher eine besonders übersichtliche und geordnete Kabelführung ermöglicht. Der Innenbereich kann mit Hilfe wenigstens eines lösbar zu befestigenden Teilungselements in wenigstens zwei Kabelaufnahmezonen unterteilt werden. Der bekannte Kabelführungsbügel weist einen etwa rechteckigen äußeren Rahmen auf und ist an jeweils einer Längsseite und einer kürzeren Seite mit einer Befestigungsöffnung versehen, so daß wahlweise eine Befestigung erfolgen kann.

Die bekannten Kabelführungsbügel können relativ rasch montiert und die Kabelstränge über die Kabeleinführungsöffnung eingelegt werden. Da die Kabelstränge und/oder Schläuche frei zugänglich geführt werden, liegen sie ungeschützt vor und können, insbesondere bei Umbaumaßnahmen, Komplettierungen, Wartungs- und Instandhaltungsarbeiten am Schrank oder an den Geräten beschädigt werden.

Der Erfindung liegt die Aufgabe zugrunde, ein Kabelkanalsystem zu schaffen, welches durch eine rasche Montage und bequeme Kabelein- und -ausführung eine Kabelführung und -verzweigung mit geringem Aufwand ermöglicht und gleichzeitig einen Schutz, insbesondere vor Umwelteinflüssen und Beschädigungen, gewährleistet und das nachträgliche Anpassungen bzw. Erweiterungen schnell und einfach ermöglicht.

Erfindungsgemäß wird diese Aufgabe durch die Merkmale des Anspruchs 1 gelöst.

Vorteilhafte und zweckmäßige Ausgestaltungen sind in den Unteransprüchen sowie in der Figurenbeschreibung enthalten.

Ein Grundgedanke der Erfindung kann darin gesehen werden, elektrische Leitungen, d.h. Kabel bzw. Kabelstränge, aber auch Schläuche für diverse Medien durch eine Abdeckung gegen Beschädigungen und Umwelteinflüsse zu schützen. Erfindungsgemäß weist das Kabelkanalsystem für technische Möbel oder auch Geräte- und Schaltschränke Kabelführungsbügel und eine Abdeckung auf, wobei die Abdeckung an den Kabelführungsbügel befestigt werden kann und dem Schutz und der zusätzlichen Halterung der Kabel dient.

Ein wesentlicher Vorteil des erfindungsgemäßen Kabelkanalsystems besteht darin, daß die Abdeckungen haubenartig ausgebildet werden können. Wenn davon ausgegangen wird, daß die Kabelführungsbügel in der Regel einen quadratischen, rechteckigen oder auch runden Querschnitt bzw. Aufnahmebereich für die Kabel aufweisen und mit einem Befestigungsbereich am jeweiligen Konstruktionsteil, beispielsweise einem Vertikalprofil oder einem horizontalen Bauteil eines Arbeitsplatzes, befestigt werden, wird bei einer als Abdeckhaube ausgebildeten Abdeckung ein nahezu vollständiger Schutz des Innenbereichs und damit der darin geführten Kabel und/oder Schläuche erreicht.

Es ist zweckmäßig, wenn die Abdeckhauben etwa den gleichen Querschnitt wie die Kabelführungsbügel aufweisen. Wenn die Kabelführungsbügel aufeinander steckbar sind, so daß bei Bedarf zwei Innenbereiche für Kabelstränge und/oder Schläuche zur Verfügung stehen, kann die Abdeckhaube auch diesem zweifachen Querschnitt entsprechen. Es ist sinnvoll, wenn die Abdeckhaube derart ausgebildet ist, daß kein zusätzlicher Platzbedarf an einem technischen Möbel oder in einem Schrank oder Gestell entsteht.

Für eine effiziente und geschützte Kabelführung, bei welcher die Befestigung der Kabelführungsbügel und das Einlegen der Kabel relativ rasch und unkompliziert durchgeführt werden kann, ist es vorteilhaft, wenn die Abdeckhauben lösbar an den Kabelführungsbügeln, z.B. an zwei Kabelführungsbügeln, befestigt werden können. Bei Bedarf kann die Abdeckhaube dann abgenommen und nach Beendigung von Umbauarbeiten etc., welche eine veränderte Kabelführung bedingen, leicht und mühelos wieder aufgesteckt oder in einer Klemmhalterung mit den Kabelführungsbügeln verbunden werden.

Von Vorteil kann auch eine ein- oder verrastende Befestigung der Abdeckhauben an den Kabelführungsbügeln sein. Rastelemente bzw. komplementär ausgebildete Rastaufnahmen können an der Abdeckhaube bzw. den Kabelführungsbügeln oder umgekehrt ausgebildet sein. Die Rastelemente können nasen- oder noppenartig ausgebildet sein. Wenn an den Kabelführungsbügeln, insbesondere nahe den Befestigungsbereichen sickenähnliche Vertiefungen oder Ausnehmungen, auch punktförmig, ausgebildet werden, kann die Abdeckhaube mit komplementären Befestigungselementen in diese Sicken und Öffnungen eingreifen.

Grundsätzlich kann die Abdeckhaube ebenso wie die Kabelführungsbügel aus einem Metall- oder Kunststoffmaterial hergestellt werden. Für eine Klemmhalterung der Abdeckhauben ist ein Material mit entsprechenden federnden Eigenschaften zweckmäßig.

Ein wesentlicher Vorteil des erfindungsgemäßen Kabelkanalsystems mit Kabelführungsbügeln und Abdeckungen, insbesondere Abdeckhauben, besteht darin, daß eine Abdeckung auch bei einer Abzweigung aus einem horizontalen in einen vertikalen Kabelstrang oder Kabelkanal bzw. umgekehrt oder Anordnung von Kabelsträngen in Richtung der drei Raumkoordinaten nahezu lückenlos abgedeckt werden können. Eine horizontal angeordnete Abdeckhaube kann bis an eine vertikal angeordnete Abdeckhaube geführt werden.

Das erfindungsgemäße Kabelkanalsystem ist besonders vorteilhaft, weil die in beabstandeten Kabelführungsbügeln geführten Kabel an jeder beliebigen Position seitlich aus der Abdeckung herausgeführt werden können und damit eine geschützte Kabelführung und -abzweigung gewährleistet ist.

Vorteilhaft ist es, wenn die Kabelführungsbügel im Bereich von Abzweigungen beispielsweise von einer vertikalen Kabelführung in eine horizontale angeordnet sind. Die geführten Kabel werden somit besonders exakt geführt und unterstützt, so daß ein Durchhängen der Kabel vermieden wird. Falls es sich um einen vertikalen Hauptkabelstrang handelt, von dem horizontal ein oder mehrere Kabel abgezweigt werden sollen, werden vorzugsweise ober- und unterhalb der horizontalen Abzweigung Kabelführungen angesetzt.

Für eine Verzweigung der Kabelstränge und/oder Schläuche ist es vorteilhaft, wenn die Abdeckhauben wenigstens bereichsweise und an wenigstens einer Längskante, vorteilhafterweise aber an beiden Längskanten, mit einem Dichtmaterial versehen sind. Das Dichtmaterial gewährleistet eine abgedichtete Kabeldurchführung und einen Kabelauslaß. Staub und andere Verunreinigungen können nicht in den Kabelkanal gelangen.

Vorteilhafte Dichtmaterialien sind Bürsten, welche als Bürstenleisten angeordnet werden können, und Kunststoffelemente, beispielsweise Moosgummi. Ein Kunststoffabschluß kann durchgängig oder aber mit Schlitzen für einen Kabelauslaß ausgebildet sein. Eine besonders vorteilhafte Verkabelung kann mit Kabelführungsbügeln, welche mit Doppel- oder Mehrfachkammern versehen sind (DE 90 17 290 U1), erreicht werden. Zweckmäßigerweise ist auch bei diesen Kabelführungsbügeln die Abdeckhaube derart ausgebildet, daß sie von außen aufgesetzt und festgeklemmt bzw. verrastet werden kann.

Besonders vorteilhaft sind Abdeckhauben, welche im Querschnitt komplementär zu den Kabelführungsbügeln ausgebildet sind und einen etwa C-förmigen oder U-förmigen Querschnitt und Klemmschenkel aufweisen, die aufgrund ihrer Vorspannung zum Aufstecken auseinanderspreizbar sind und in Abdeckstellung sicher an den Kabelführungsbügeln gehalten sind.

In einer Weiterbildung der Erfindung sind die U-förmigen Kabelführungsbügel Haltefedern für die Abdeckung bzw. den Kabelkanal und weisen wellenförmig ausgebildete Schenkel auf. Im Querschnitt sind die wellenförmigen Schenkel spiegelsymmetrisch ausgebildet und die Wellentäler reichen bis auf einen Abstand aneinander, welcher etwa der Kabeleinführungsöffnung entspricht. Die Kabeleinführungsöffnung ist gegenüber dem Befestigungsbereich ausgebildet. Die wellenförmigen Schenkel der Kabelkanal-Haltefedern erlauben eine Anordnung von Kabeln in einem Innenbereich und im Bereich der Wellentäler auch in einem Außenbereich. Dieser Außenbereich ist von einer Kabelabdeckung, deren Querschnitt mit dem lichten Querschnitt der Kabelkanal-Haltefedern übereinstimmt, abgedeckt.

Es ist besonders zweckmäßig, die zwei Schenkel der Haltefedern in einem an dem Befestigungsbereich angrenzenden Bereich glatt und nicht wellenartig auszubilden. Wenn dieser glatte Bereich beider Schenkel zudem eine geringere Breite als der wellenartig ausgebildete Bereich der Schenkel aufweist, besteht die Möglichkeit, die Abdeckhaube in einer Klemmhalterung an den Haltefedern lösbar zu befestigen.

Die U-förmige Abdeckung bzw. der aufsteckbare Kabelkanal kann doppellagige Schenkel mit nach innen gerichteten Klemmstegen an den freien Enden aufweisen, welche in Befestigungsstellung an den glatten Bereichen der Kabelkanal-Haltefeder anliegen. Parallel zu den innenendseitigen Klemmstegen ist die Abdeckhaube außendendseitig mit Kantenbereichen versehen, auf welche Dichtelemente, beispielsweise Bürstenleisten, aufgesteckt werden können. Diese Dichtelemente reichen vorteilhaft bis nahe an das Vertikalprofil bzw. horizontale Bauteil heran, an denen die Kabelführungsbügel bzw. Haltefedern mit Kabelkanalabdeckung befestigt sind.

Die Kabelführungsbügel können insbesondere an Vertikalprofilen, z.B. Stützenfüßen von Konsolen, Arbeitstischen und dergleichen, und auch an horizontalen Bauteilen, wie Tiefenholmen oder Querholmen, Arbeitsebenen oder Tischplatten, befestigt werden. In der Regel sind T-Nuten oder Rundlöcher vorgesehen und die Befestigung erfolgt mit Hilfe einer Befestigungsschraube und in den T-Nuten gehaltenen Muttern.

Die Kabelführungsbügel können auch beabstandet zueinander an einer Führungsschiene, welche in oder an einem Schrank oder einem Gestell befestigt wird, angeordnet sein. Die Abdeckhaube kann dann lösbar an wenigstens zwei Kabelführungsbügeln oder auch an der Führungsschiene befestigt werden.

Das Kabelkanalsystem ist vorzugsweise für technische Möbel, Gestelle, Schränke und dergleichen geeignet, die ein Trägersystem, z.B. aus Aluminiumprofilen, wie es in der DE 92 06 369 beschrieben ist, geeignet. Selbstverständlich ist das Kabelkanalsystem hierauf jedoch nicht beschränkt. Die Kabelhalter bzw. die Kabelführungsbügel werden durch Stecken, Klemmen, Schrauben oder dergleichen mit dem Trägerelement, vorzugsweise dem genannten Aluminiumprofil, verbunden.

Der Kabelführungsbügel kann verschiedene, im Ausführungsbeispiel näher beschriebene Formen aufweisen. Der Kabelführungsbügel dient dabei zur Kabelfixierung sowie zur Fixierung der Abdeckung. Die Abdeckung kann vorzugsweise aus Blech oder Kunststoff gebildet sein und einen geschlossenen Aufbau aufweisen. Nach dem Aufsetzen der Abdeckung auf die Kabelführungsbügel sind die geführten Kabel vollständig abgedeckt. Zur Kabeldurchführung weist die Abdeckung, wie bereits beschrieben, an den Längskanten Bürstenleisten, Moosgummi oder ähnliches auf. Somit können die geführten Kabel an einer beliebigen Stelle aus dem Kabelkanal abgezweigt und entweder direkt einem zugehörigen Gerät oder System bzw. einem weiterführenden Kabelkanal zugeführt werden.

Vorteilhafte Weiterbildungen und Ausgestaltungen ergeben sich aus den Unteransprüchen und aus den nachfolgend anhand der Zeichnung prinzipmäßig dargestellten Ausführungsbeispielen.

Es zeigt:
- **Fig. 1**: eine perspektivische Ansicht eines erfindungsgemäßen Kabelkanalsystems im Bereich eines Vertikalprofils eines technischen Möbels;
- **Fig. 2**: eine perspektivische Ansicht eines erfindungsgemäßen Kabelkanalsystems im Bereich eines Horizontalprofils eines technischen Möbels;
- **Fig. 3**: eine perspektivische Ansicht eines erfindungsgemäßen Kabelkanalsystems mit einer Verzweigung (ohne Abdeckung);
- **Fig. 4**: einen Querschnitt durch das in Fig. 1 dargestellte Kabelkanalsystem mit abgehobener Abdeckung;
- **Fig. 5**: einen Querschnitt durch das in Fig. 1 dargestellte Kabelkanalsystem mit aufgesetzter Abdeckung;
- **Fig. 6**: eine Ansicht von oben auf ein Kabelkanalsystem gemäß Fig. 3 mit aufgesetzter Abdeckung;
- **Fig. 7**: einen Querschnitt durch verschiedene Varianten des erfindungsgemäßen Kabelführungsbügels;
- **Fig. 8**: verschiedene Befestigungsstellen zur Befestigung des Kabelführungsbügels an technischen Möbeln, insbesondere an Profil-Trägerelementen; und
- **Fig. 9**: einen Querschnitt durch die Abdeckung im Bereich des Kabelführungsbügels.

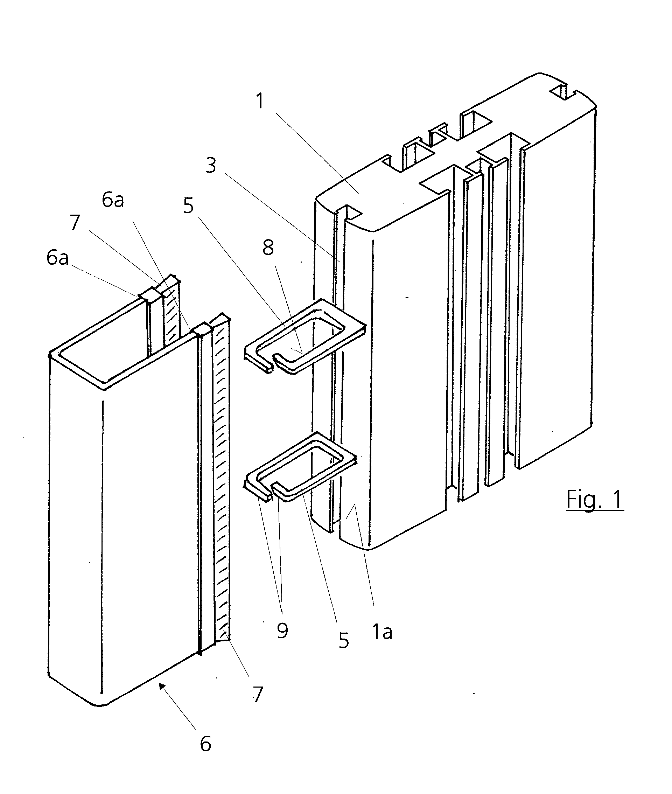

Fig. 1 zeigt ein vertikales Trägerelement 1 eines technischen Möbels in einer rückseitigen Ansicht. An dem vertikalen Trägerelement 1 können in üblicher Weise beliebige Elemente, wie z.B. Schrankelemente, Anbauelemente und dergleichen angeordnet sein. Vorzugsweise eignet sich das technische Möbel auch als Computerleitstand, auf dem Kontrollmonitore sowie Tastaturauszüge in verschiedenen Ebenen angeordnet sind.

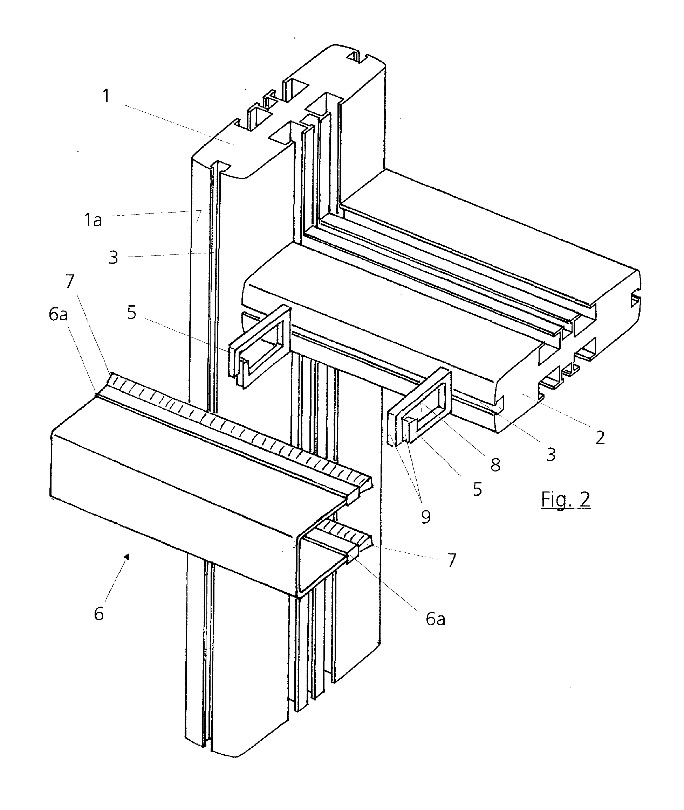

An das horizontale Trägerelement 1 können sich beliebig viele horizontale Trägerelemente 2 anschließen. Fig. 2 zeigt hierfür ein Ausführungsbeispiel. Die horizontalen Trägerelemente 2 können Arbeitsebenen, Fachböden oder dergleichen tragen. Die Verbindung zwischen derartigen vertikalen Trägerelementen 1 und horizontalen Trägerelementen 2, insbesondere in Ausgestaltungen als Profilleisten ist hinlänglich bekannt, weshalb hierauf nachfolgend nicht näher eingegangen wird.

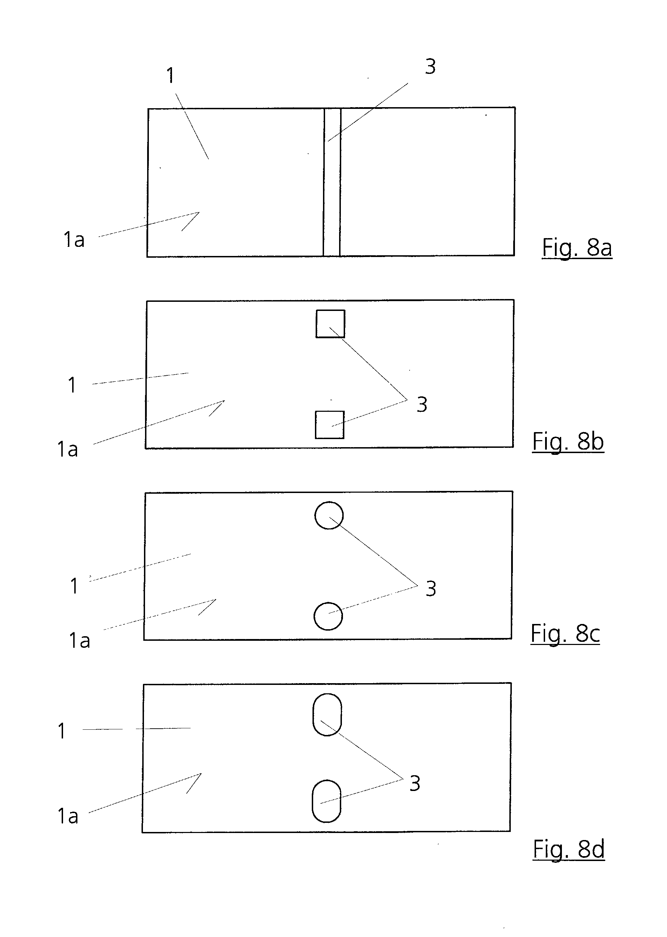

Das vertikale Trägerelement 1 ist zur Vereinfachung nur in einer rückseitigen Stirnansicht 1a dargestellt und weist Befestigungsbereiche 3 auf. Die Befestigungsbereiche sind gemäß den Figuren 1 bis 6 als T-Nuten 3 ausgebildet. Alternativ dazu können die Befestigungsbereiche jedoch auch gemäß den Figuren 8a bis 8d ausgebildet sein.

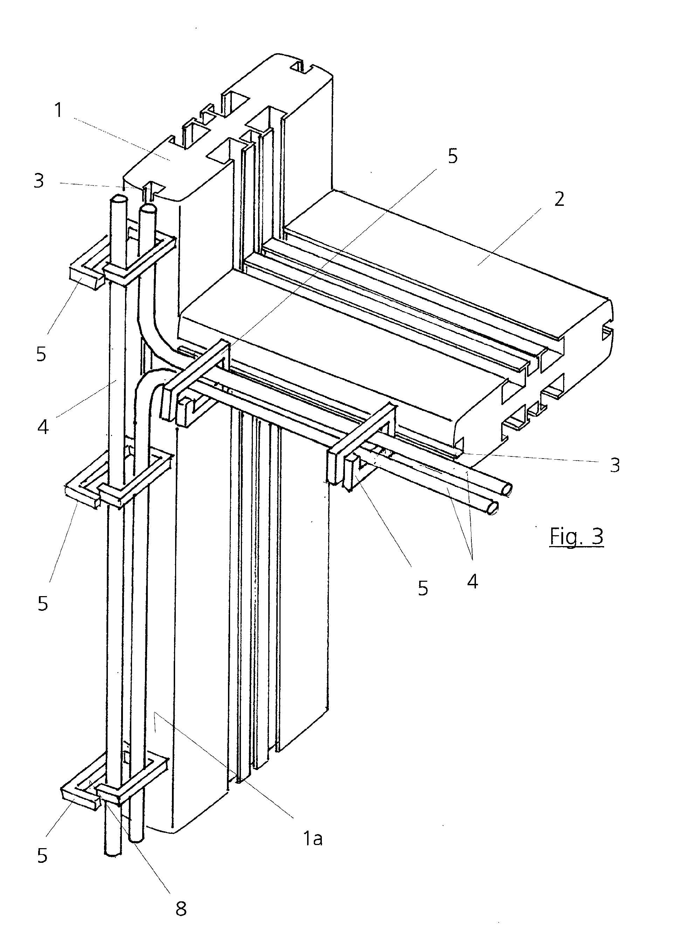

In den T-Nuten 3 sind zur vertikalen Führung und Halterung von Kabelsträngen 4 bzw. von einzelnen Kabeln (die in Fig. 3 näher dargestellt sind) Kabelführungsbügel 5 voneinander beabstandet angeordnet. Die Kabelführungsbügel 5 sind mit Hilfe nicht näher dargestellter Befestigungselemente in den T-Nuten 3 fixiert. Die Befestigungselemente, mit denen die Kabelführungsbügel 5 in den T-Nuten 3 fixiert sind bzw. alternativ dazu in den Befestigungsbereichen 3 gemäß den Figuren 8a bis 8d befestigt werden können, sind für andere Anwendungszwecke, beispielsweise zum Befestigen von Zubehörteilen an derartigen Trägerelementen 1, 2 hinlänglich bekannt, weshalb hierauf nicht näher eingegangen wird. Vorstellbar ist hierbei beispielsweise, daß entsprechende Muttern oder dergleichen in die jeweilige T-Nut 3 eingebracht werden und die Kabelführungsbügel 5 entsprechend verschraubt, verklemmt oder eingesteckt werden. Möglich ist dabei auch, an die Kabelführungsbügel 5 Klemmelemente anzubringen, die sich nach einer Verdrehbewegung in der T-Nut 3 entsprechend verkeilen.

Zur Befestigung der Kabelführungsbügel 5 in Trägerelementen 1, 2 ergeben sich aus der DE 42 12 533 weitere vorteilhafte Möglichkeiten.

In Fig. 1 und Fig. 2 sowie den Figuren 4 bis 6 sind beabstandet zu den Kabelführungsbügeln 5 Abdeckungen 6, welche als Abdeckhauben ausgebildet sind, gezeigt. Die Abdeckhauben 6 sind im Querschnitt U-förmig ausgebildet und derart dimensioniert, daß sie auf die Kabelführungsbügel 5 von außen aufgesteckt und in einer Klemmhalterung gehalten werden können.

Um eine einfache und beschädigungslose seitliche Abzweigung von Kabeln bzw. Kabelsträngen 4 in jeder beliebigen Position gemäß Fig. 3 zu ermöglichen und gleichzeitig die Schutzfunktion der Abdeckhaube 6 aufrecht zu erhalten, sind im Bereich der Längskanten 6a der Abdeckhaube 6 Dichtelemente 7 angeordnet. Die Dichtelemente 7 sind in dem Ausführungsbeispiel als Bürstenleisten ausgebildet. Die Bürstenleisten 7 erstrecken sich über die gesamte Länge der Längskanten 6a.

In nicht dargestellter Weise kann die Abdeckhaube 6 Schenkelverstärkungen aufweisen, die regelmäßig angeordnet sind und die Abdeckhaube 6 entsprechend versteifen. Die Schenkelverstärkungen verlaufen dabei vorzugsweise innerhalb des U-förmigen Profils der Abdeckhaube 6. Die Schenkelverstärkungen verbessern auch die Klemmhalterung der Abdeckhaube 6 an den Kabelführungsbügeln 5 und können an beliebigen Bereichen der Abdeckhaube 6 ausgebildet sein. Dabei können sie am gesamten Umfang der Abdeckhaube 6 oder aber nur im Bereich der beidseitigen Schenkel vorgesehen sein.

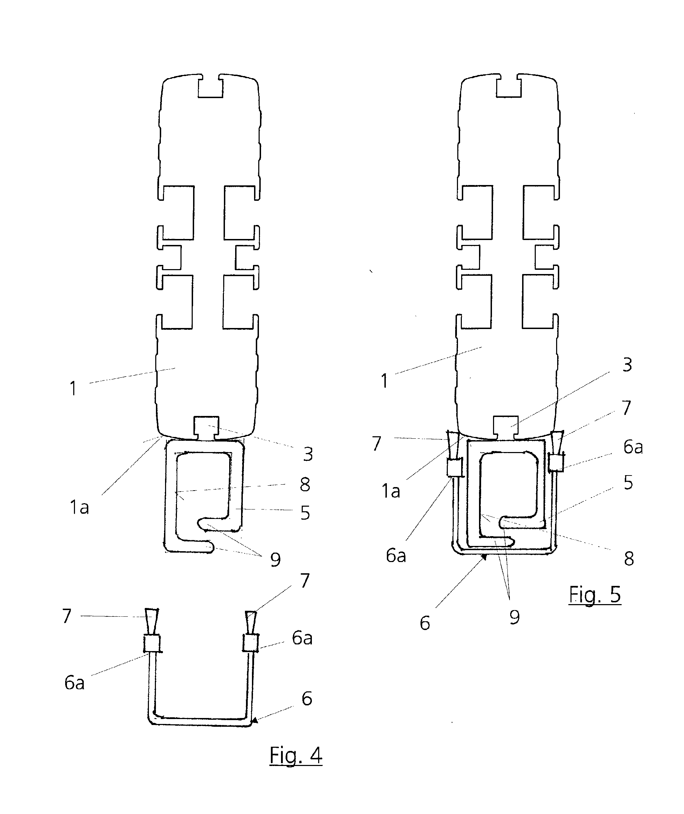

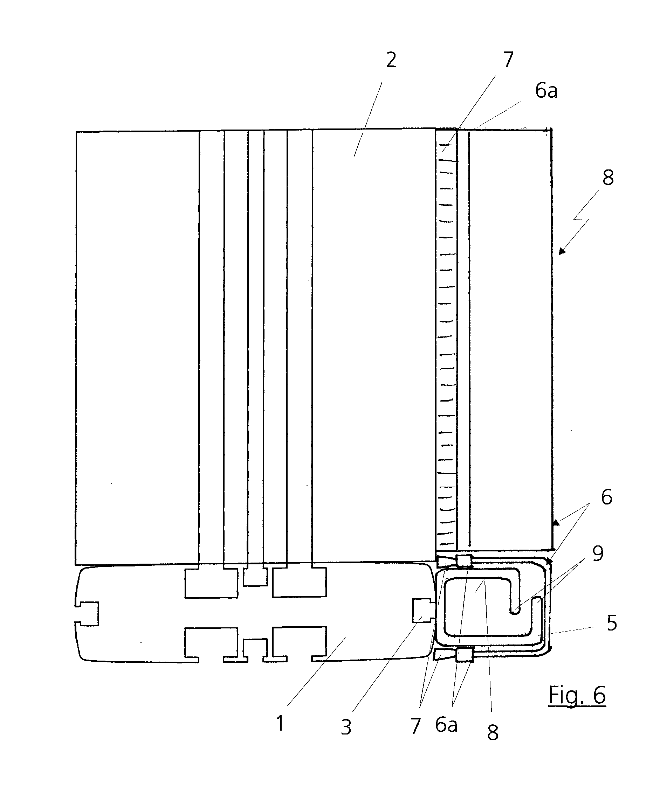

Nach einem Aufsetzen der Abdeckhaube 6 auf die Kabelführungbügel 5 entsteht ein geschlossener Kabelkanal 8, wie er beispielsweise im Querschnitt in Fig. 5 und Fig. 6 dargestellt ist.

Alternativ zu dem in Fig. 6 dargestellten horizontalen Kabelkanal 8 in der geschlossenen Ausführung kann auch vorgesehen sein, daß der Kabelkanal 8 nach oben offen ausgebildet ist, so daß die im vertikalen Kabelkanal 8 geführten Kabel 4 erforderlichenfalls seitlich herausgeführt und horizontal im Kabelkanal 8 angeordnet werden können.

Fig. 5 zeigt in Befestigungsstellung einen Kabelführungsbügel 5 und die Abdeckhaube 6. Wie bereits erwähnt, ist eine Schenkelverstärkung im Ausführungsbeispiel nicht dargestellt. Diese ist bei einer entsprechend stabilen Ausgestaltung der Abdeckhaube 6 auch nicht notwendig.

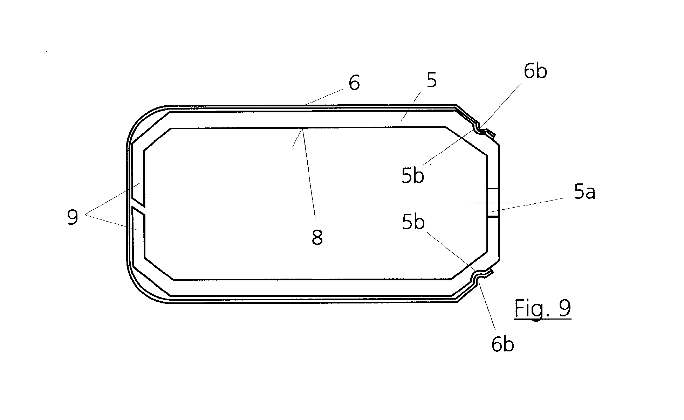

Der Kabelführungsbügel 5 kann grundsätzlich vertikal und horizontal angeordnet werden. Der Kabelführungsbügel 5 kann eine Befestigungsöffnung 5a (in Fig. 9 prinzipmäßig angedeutet) aufweisen, durch die ein Befestigungselement, beispielsweise eine Schraube, welche mit einer in der T-Nut 3 angeordneten Mutter zusammenwirkt, durchführbar ist. Selbstverständlich läßt sich eine derartige Befestigungsöffnung bzw. eine durchführbare Befestigungsschraube auch mit anderen Befestigungsbereichen 3, wie sie sich beispielsweise aus den Figuren 8b, 8c und 8d ergeben, kombinieren.

Wie aus den in Fig. 1 bis Fig. 7 sowie in Fig. 9 dargestellten Ausführungsformen ersichtlich ist, kann der Kabelführungsbügel 5 mit nahe aneinander reichenden und zur Einführung von Kabeln 4 spreizbaren Bügelenden 9 ausgebildet sein.

Fig. 5 zeigt, daß die Abdeckhaube 6 in einer Klemmhalterung an dem Kabelführungsbügel 5 gehalten ist und den Kabelkanal 8, welcher vom Innenbereich des Kabelführungsbügels 5 definiert ist, nahezu vollständig abdeckt. Nur der an das vertikale Trägerprofil 1 oder ein anderes Bauteil angrenzende Bereich des Kabelführungsbügels 5 ist nicht von der Abdeckhaube 6 abgedeckt.

Zur Befestigung der Abdeckhaube 6 an den Kabelführungsbügel 5 sind verschiedene Möglichkeiten denkbar. Beispielsweise kann die Fixierung durch ein gewisses Aufspreizen der Abdeckhaube 6 erfolgen. Alternativ dazu können, wie bereits erwähnt, Schenkelverstärkungen an beliebigen Stellen der Abdeckhaube 6 vorgesehen sein, die durch eine leichte Aufspreizung eine sichere Fixierung der Abdeckhaube 6 an den Kabelführungsbügeln 5 gewährleisten. Fig. 9 zeigt eine prinzipmäßig dargestellte Klemmhalterung, dabei sind im Bereich der freien Enden der Schenkel der Abdeckhaube 6 Rasterelemente 6b vorgesehen, die in entsprechenden Stellen der Kabelführungsbügel 5 vorgesehene Rasteraufnahmen 5b einhaken bzw. mit diesen zusammenwirken. Die Rasterelemente 6b und Rasteraufnahmen 5b sind hierfür entsprechend komplementär ausgebildet. Vorstellbar ist dabei auch, daß der Bereich, an dem die Dichtelemente 7 an den Schenkeln der Abdeckhaube 6 angeordnet sind, verdickt ist und in entsprechende Rasteraufnahmen der Kabelführungsbügel 5 einrastet.

In einer nicht dargestellten Ausführungsform kann auch vorgesehen sein, daß die Dichtelemente 7 an kurzen Teilstücken entfallen und stattdessen entsprechende Rasterelemente ausgebildet sind, die leicht nach innen gekrümmt sind. Dadurch wird der Abstand zwischen den Schenkeln an deren vorderen Enden reduziert, wodurch sich eine vorteilhafte Klemmwirkung der Abdeckhaube 6 an den Kabelführungsbügeln 5 ergibt.

In den Figuren 2, 3 und 6 ist das erfindungsgemäße Kabelkanalsystem am Beispiel eines vertikalen Trägerelementes 1 und eines horizontalen Trägerelementes 2 bzw. eines Bauteiles gezeigt. Die Darstellungen machen die Ausbildung der Kabelführungsbügel 5 an dem vertikalen Trägerelement 1 mit darin aufgenommenen Kabeln bzw. Kabelsträngen 4 und einem seitlichen Kabelauslaß für eine horizontale Führung in einem an dem horizontalen Trägerelement 2 angeordneten Kabelführungsbügel 5 deutlich. Die Kabelführungsbügel 5 können dabei identische (wie dargestellt) oder auch verschiedene Formen aufweisen.

Aus Fig. 6 ergibt sich, daß die dargestellten horizontalen und vertikalen Abdeckhauben 6 nahezu aneinander grenzend an dem entsprechend angeordneten Kabelführungsbügel 5 befestigt werden können und somit einen sicheren Schutz vor Beschädigungen, Staub und Umwelteinflüssen gewährleisten. Um einen abgedichteten Kabelauslaß bzw. eine Abzweigung der in den Kabelkanälen 8 angeordneten Kabel 4 zu gewährleisten, sind, wie bereits erwähnt, an beiden Längskanten 6a, d.h. an den freien Enden der Schenkel der Abdeckhauben 6, Bürstenleisten 7 angeordnet.

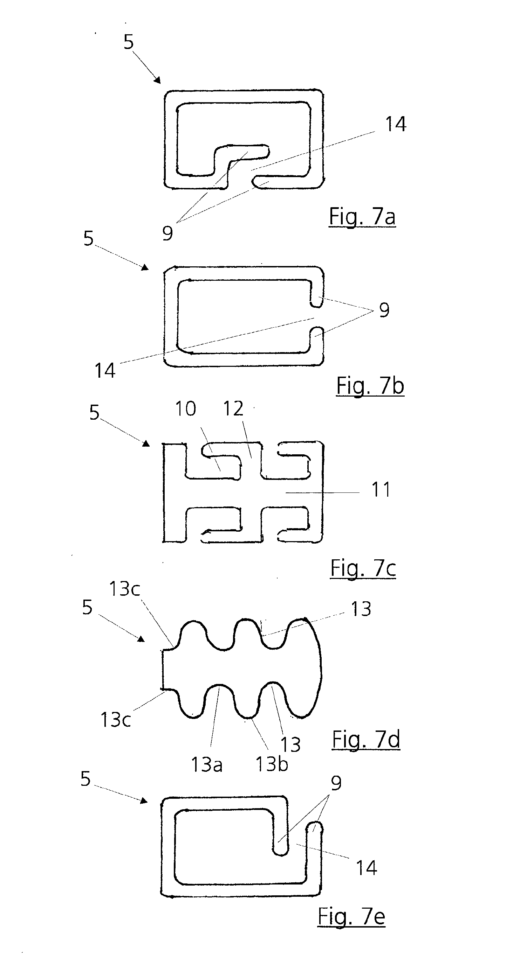

Aus den Figuren 7a bis 7e sind verschiedene Formen der Kabelführungsbügel 5 ersichtlich. Bei entsprechender Größe können die Kabelführungsbügel 5, die in den Figuren 7a bis 7e in verschiedenen Ausführungsformen dargestellt sind, Trennstege aufweisen, so daß eine geordnete Aufnahme von Kabeln 4 gewährleistet ist.

Gemäß Fig. 7a lassen sich die Kabel 4 mit Hilfe eines, vorzugsweise elastischen Schleusenbereich 14 bzw. eines Schleusensystems in den Kabelführungsbereich bzw. den Kabelkanal 8 einbringen. Der Schleusenbereich 14 ist an einer der Längsseiten des Kabelführungsbügels 5 angeordnet.

Fig. 7b zeigt einen Kabelführungsbügel 5, der aus zwei gleichförmig ausgebildeten Schenkeln besteht. Die Enden der Schenkel bzw. die Bügelenden 9 können dabei aufspreizbar ausgebildet sein.

Fig. 7c zeigt eine Ausgestaltung des Kabelführungsbügels 5 mit definiert abgetrennten Aufnahmebereichen 10, in die jeweils ein oder mehrere Kabel einbringbar sind. Der Kabelführungsbügel 5 weist dabei einen Mittelsteg 11 auf, aus dem vier Haken 12 zur Führung der Kabel 4 ragen.

In Fig. 7d ist ein Kabelführungsbügel 5 dargestellt, der an seinen beiden Längsseiten wellenförmige Schenkel 13 aufweist. Die wellenförmigen Schenkel 13 weisen Wellentäler 13a und Wellenberge 13b auf, welche spiegelsymmetrisch und zur Aufnahme von Kabeln bzw. von Kabelsträngen 4 ausgebildet sind. Die Wellentäler 13a reichen bis auf einen Abstand aneinander, welcher etwa der Kabeleinführungsöffnung gemäß der Fig. 7b entspricht.

Zur Realisierung einer lösbaren und insbesondere werkzeuglosen Befestigung der Abdeckhaube 6 an dem Kabelführungsbügel 5 gemäß der Fig. 7d weisen die wellenförmig ausgebildeten Schenkel 13 einen sich verjüngenden, glatten Bereich 13c auf, welcher zum Hintergreifen und Verklemmen geeignet ist.

Fig. 7e zeigt einen Kabelführungsbügel _5 gemäß der Ausführungen in den Figuren 1 bis 6, wobei ein Schleusenbereich 14 vorgesehen ist. Der Schleusenbereich 14 ist dabei an der von dem jeweiligen Trägerelement 1, 2 abgewandten Stirnseite angeordnet.

In nicht dargestellter Weise kann vorgesehen sein, daß die Abdeckhaube 6 doppellagig ausgebildete Schenkel aufweist. Dabei kann vorgesehen sein, daß die innere Lage zur Verklemmung und die äußere Lage als Kantenbereich dient. Die innere Lage kann dabei komplementär zu dem entsprechenden Schenkelbereich des Kabelführungsbügels 5 ausgebildet sein und in Klemmstellung an diesen anliegen. Die außen liegende Lage kann fluchtend zur Hauptrichtung der Schenkel des Kabelführungsbügels 5 ausgebildet sein und eine Aufnahme für die Dichtelemente 7 aufweisen.

Aus den Figuren 8a bis 8d ergeben sich verschiedene Ausgestaltungen der Befestigungsbereiche 3. Dabei zeigt die Fig. 8a eine nutförmige Ausgestaltung des Befestigungsbereiches 3. Diese ist im Ausführungsbeispiel als T-Nut, wie sich aus den Figuren 1 bis 6 ergibt, ausgestaltet. Die Fig. 8b zeigt eine Ausgestaltung der Befestigungsbereiche 3 als Vierkantlochung. In Fig. 8c ist eine Ausgestaltung der Befestigungsbereiche 3 als Rundlochung vorgesehen. Sowohl hinsichtlich der Fig. 8b als auch hinsichtlich der Fig. 8c ist eine stufenförmige Verstellung bzw. Einstellung der Kabelführungsbügel 5 möglich.

Fig. 8d zeigt eine Ausgestaltung der Befestigungsbereiche 3 als Langloch. Auch somit können die Kabelführungsbügel 5 in verschiedenen Stufen verstellt werden. Die langlochförmige Ausgestaltung der Befestigungsbereiche 3 ermöglicht dabei eine gewisse Verschiebung des Befestigungselementes des Kabelführungsbügels 5 innerhalb des Langloches.

Bezüglich der Kabelführungsbügel 5 sind zahlreiche Ausgestaltungen- möglich. Dabei kann beispielsweise vorgesehen sein, daß die Kabelführungsbügel 5 vollständig als Blechscheibe mit entsprechenden Einbuchtungen ausgestaltet sind. Dies gilt insbesondere hinsichtlich der in Fig. 7d dargestellten Ausführungsform, die sowohl bügelförmig als auch vollständig als Blechscheibe ausgebildet sein kann.

Zur Anbringung des Dichtelementes 7, insbesondere in einer Ausgestaltung als Bürstenleiste, kann es vorteilhaft sein, wenn sich die Schenkel der Abdeckhaube 6 in Richtung auf das Trägerelement 1, 2 verjüngt. Die Bürstenleiste 7 kann auch doppellagig ausgestaltet sein.

## Patentansprüche

1. Kabelkanalsystem für technische Möbel, Schränke und Gestelle, welche zur Aufnahme elektrischer und elektronischer Geräte und Bauteile vorgesehen sind, mit Kabelführungsbügeln zum Führen und Halten von Kabelsträngen,
**dadurch gekennzeichnet, daß**
für die Kabelstränge (4) Abdeckungen (6) vorgesehen sind und daß die Abdeckungen (6) an den Kabelführungsbügeln (5) fixierbar sind.

2. Kabelkanalsystem nach Anspruch 1,
**dadurch gekennzeichnet, daß**
die Abdeckungen als Abdeckhauben (6) ausgebildet sind und daß die Abdeckhauben (6) lösbar an den Kabelführungsbügeln (5) fixierbar sind.

3. Kabelkanalsystem nach Anspruch 1 oder 2,
**dadurch gekennzeichnet, daß**
die Abdeckhauben (6) nahezu den gleichen Querschnitt wie die Kabelführungsbügel (5) aufweisen und aufsteckbar an den Kabelführungsbügeln (5) gehalten sind.

4. Kabelkanalsystem nach Anspruch 1, 2 oder 3,
**dadurch gekennzeichnet, daß**
die Abdeckhauben (6) in einer Klemmhalterung an den Kabelführungsbügeln (5) gehalten sind.

5. Kabelkanalsystem nach einem der Ansprüche 1 bis 4,
**dadurch gekennzeichnet, daß**
die Abdeckhauben (6) mit Rastelementen (6b) und die Kabelführungsbügel (5) mit Rastaufnahmen (5b) versehen sind und daß die Abdeckhauben (6) nach Einrasten der Rastelemente (6b) in den Rastaufnahmen (5b) an den Kabelführungsbügeln (5) gehalten sind.

6. Kabelkanalsystem nach einem der Ansprüche 1 bis 5,
**dadurch gekennzeichnet, daß**
die Kabelführungsbügel (5) wenigstens annähernd ringförmig, quadratisch oder rechteckig ausgebildet sind und zur vertikalen oder horizontalen Kabelführung an Befestigungsbereiche (3) eines technischen Möbels, Schrankes, Gestells, insbesondere eines vertikalen und/oder horizontalen Trägerelements (1,2) fixierbar sind.

7. Kabelkanalsystem nach Anspruch 6,
**dadurch gekennzeichnet, daß**
die Befestigungsbereiche als T-Nuten (3) oder Löcher ausgebildet sind und daß die Kabelführungsbügel (5) mit einem Befestigungselement in den T-Nuten (3) oder Löchern fixierbar sind.

8. Kabelkanalsystem nach einem der Ansprüche 2 bis 7,
**dadurch gekennzeichnet, daß**
die Abdeckhauben (6) als U- oder C-förmige Abdeckhauben (6) ausgebildet sind und zur Abdeckung von vertikal und/oder horizontal geführten Kabelsträngen (4) bzw. Kabeln in eine jeweils erforderliche Länge ablängbar sind.

9. Kabelkanalsystem nach einem der Ansprüche 2 bis 8,
**dadurch gekennzeichnet, daß**
die Abdeckhauben (6) längsseitig für eine Abzweigung von Kabelsträngen (4) oder Kabeln mit Ausnehmungen versehen sind.

10. Kabelkanalsystem nach einem der Ansprüche 2 bis 9,
**dadurch gekennzeichnet, daß**
die Abdeckhauben (6) wenigstens bereichsweise mit einem Dichtelement (7) versehen sind.

11. Kabelkanalsystem nach Anspruch 10,
**dadurch gekennzeichnet, daß**
als Dichtelement (7) eine Bürstenleiste, ein Weichgummielement, ein Schaumstoffelement oder ein Moosgummi angeordnet ist.

12. Kabelkanalsystem nach Anspruch 11,
**dadurch gekennzeichnet, daß**
das Weichgummielement und/oder das Moosgummi und/ oder das Schaumstoffelement durchgängig oder geschlitzt ausgebildet ist.

13. Kabelkanalsystem nach einem der Ansprüche 2 bis 12,
**dadurch gekennzeichnet, daß**
Kabelstränge (4) bzw. einzelne Kabel in den Kabelführungsbügeln (5) gehalten und geführt sind und mit den Abdeckhauben (6) abdeckbar sind.

14. Kabelkanalsystem nach einem der Ansprüche 2 bis 13,
**dadurch gekennzeichnet, daß**
die Kabelführungsbügel (5), welche vorzugsweise U-förmig ausgebildet sind, einen Quersteg zur Anlage an den Trägerelementen (1 bzw. 2) mit einer Befestigungsöffnung (5a) aufweisen.

15. Kabelkanalsystem nach einem der Ansprüche 1 bis 14,
**dadurch gekennzeichnet, daß**
die Schenkel der Kabelführungsbügel (5) wenigstens bereichsweise als wellenförmig ausgebildete Schenkel (13) ausgebildet sind und Wellentäler (13a) und Wellenberge (13b) aufweisen, welche zur Aufnahme von Kabeln bzw. Kabelsträngen (4) ausgebildet sind.

16. Kabelkanalsystem nach Anspruch 15,
**dadurch gekennzeichnet, daß**
die Schenkel (13) vom wellenförmigen Bereich in einen glatten Bereich (13c) übergehen und in diesem glatten Bereich (13c) einen geringen Abstand für eine Klemmhalterung der Abdeckhaube (6) aufweisen.

17. Kabelkanalsystem nach Anspruch 15 oder 16,
**dadurch gekennzeichnet, daß**
die Abdeckhaube (6) U-förmig ausgebildet ist und mit Schenkel mit Klemmstegen zum Hintergreifen der wellenförmigen und glatten Schenkelbereiche (13 bzw. 13c) des Kabelführungsbügels (5) versehen ist.

18. Kabelkanalsystem nach Anspruch 17,
**dadurch gekennzeichnet, daß**
die Schenkel der Abdeckhaube (6) doppellagig ausgebildet sind und innenendseitig mit den Klemmstegen und außenendseitig mit Kantenbereichen versehen sind, an denen Dichtelemente (7), beispielsweise Bürstenleisten, fixierbar sind.
